Europäisches Patentamt

European Patent Office

Office européen des brevets

(19)

(11) **EP 0 712 868 B1**

(12) **FASCICULE DE BREVET EUROPEEN**

(45) Date de publication et mention
de la délivrance du brevet:
**04.03.1998 Bulletin 1998/10**

(51) Int. Cl.$^6$: **C08F 10/00**, C08F 4/69, C08F 4/02

(21) Numéro de dépôt: 95203008.8

(22) Date de dépôt: 07.11.1995

(54) **Système catalytique pour la polymérisation d'oléfines et procédé de polymérisation d'au moins une oléfine en présence de ce système catalytique**

Katalysatorsystem für die Polymerisation von Olefinen und Verfahren zur Polymerisation von mindestens einem Olefin in Anwesenheit dieses Katalysatorsystems

Catalyst system for the polymerization of olefins and process for the polymerization of at least one olefin in the presence of this catalyst system

(84) Etats contractants désignés:
**AT BE CH DE DK ES FR GB IE IT LI NL PT SE**

(30) Priorité: **16.11.1994 BE 9401024**

(43) Date de publication de la demande:
**22.05.1996 Bulletin 1996/21**

(73) Titulaire:
**SOLVAY POLYOLEFINS EUROPE - BELGIUM
(Société Anonyme)
1050 Bruxelles (BE)**

(72) Inventeurs:
• **Grosjean, Abel
Houston, Texas 77062 (US)**

• **Koch, Benoît
B-4280 Hannut (BE)**

(74) Mandataire:
**Destryker, Elise Martine et al
Solvay Polyolefins Europe-Belgium
(Société Anonyme)
Département de la Propriété Industrielle
310, rue de Ransbeek
1120 Bruxelles (BE)**

(56) Documents cités:
EP-A- 0 045 855     EP-A- 0 166 157
EP-A- 0 188 658     WO-A-94/26790
FR-A- 1 242 530     US-A- 5 240 895

## Description

La présente invention concerne un système catalytique pour la polymérisation d'oléfines comprenant notamment un solide catalytique à base de chrome déposé sur un support minéral. Elle concerne également un procédé de polymérisation d'au moins une oléfine en présence de ce système catalytique.

Les catalyseurs pour la polymérisation d'oléfines à base de chrome déposés sur un support minéral sont bien connus, tels que par exemple les catalyseurs décrits dans la demande de brevet EP-A-0166157. Dans l'exemple 6 de cette demande de brevet on copolymérise de l'éthylène avec de l'hexène au moyen d'un mélange de deux catalyseurs au chrome, le premier étant déposé sur un support d'alumine traitée avec du tétraéthylate de silicium SILBOND ® 40, et le second sur un support de phosphate d'aluminium. Dans ce procédé de copolymérisation on utilise également du triéthylborane $(C_2H_5)_3$-B à titre de cocatalyseur.

Ce procédé connu présente l'inconvénient de nécessiter une concentration en comonomère relativement élevée afin de pouvoir diminuer sensiblement la densité du polyéthylène.

La présente invention remédie à cet inconvénient en fournissant un système catalytique nouveau pour la polymérisation d'oléfines qui permet d'abaisser la densité des polyoléfines en y incorporant une quantité faible, voire nulle, de comonomère.

A cet effet, l'invention concerne un système catalytique pour la polymérisation d'oléfines comprenant un solide catalytique à base de chrome déposé sur un support contenant de la silice, de l'alumine et du phosphate d'aluminium et un cocatalyseur choisi parmi les composés organoaluminiques.

Une des caractéristiques essentielles de l'invention est la combinaison d'un composé organoaluminique à titre de cocatalyseur avec un solide catalytique à base de chrome déposé sur un support contenant de la silice, de l'alumine et du phosphate d'aluminium.

Le composé organoaluminique du système catalytique de l'invention est le plus souvent choisi parmi les composés de formule $AlR_{3-n-m}(OR')_nX_m$ dans laquelle R et R' sont identiques ou différents et représentent chacun un radical hydrocarboné, X représente un halogène, n et m représentent des nombres tels que $0 \leq n < 3$ et $0 \leq m < 3$. A titre d'exemples de composé organoaluminique utilisable dans l'invention on peut citer l'éthoxyde de diéthylaluminium $[(C_2H_5)_2Al(O-C_2H_5)]$, le dichlorure d'éthylaluminium $[Al(C_2H_5)Cl_2]$, le sesquichlorure d'éthylaluminium $[Al_2(C_2H_5)_3Cl_3]$, le chlorure de diéthylaluminium $[Al(C_2H_5)_2Cl]$, le triméthylaluminium $[Al(CH_3)_3]$, le tri-isobutylaluminium $[Al(i-C_4H_9)_3]$ et le triéthylaluminium $[Al(C_2H_5)_3]$.

Dans le composé organoaluminique du système catalytique de l'invention, R et R' sont avantageusement choisis parmi les radicaux hydrocarbonés comprenant jusqu'à 20 atomes de carbone et de préférence jusqu'à 6 atomes de carbone. On obtient de bons résultats lorsque R et R' sont choisis parmi les radicaux alkyle (linéaire ou branché), cycloalkyle, aryl-alkyle, aryle et alkylaryle. Les meilleurs résultats sont obtenus lorsque R représente un radical alkyle linéaire ou branché. X est généralement choisi parmi le fluor et le chlore. Le chlore convient particulièrement bien. En règle générale, n et m ne dépassent pas 2, en particulier pas 1. De préférence, n et m sont 0.

Les composés organoaluminiques préférés sont le triméthylaluminium, le tri-isobutylaluminium et le triéthylaluminium. Le triéthylaluminium est tout particulièrement préféré.

Aux fins de la présente invention, on entend désigner par composé organoaluminique un ou plusieurs de ces composés. Toutefois, on préfère un seul composé organoaluminique.

Une autre caractéristique importante de l'invention réside dans la composition du support du solide catalytique qui contient simultanément de la silice, de l'alumine et du phosphate d'aluminium.

Le support du solide catalytique de l'invention présente avantageusement une surface spécifique d'au moins 100 $m^2/g$, en particulier d'au moins 180 $m^2/g$, les valeurs d'au moins 220 $m^2/g$ étant les plus favorables. La surface spécifique est le plus souvent d'au plus 800 $m^2/g$, plus précisément d'au plus 700 $m^2/g$, les valeurs d'au plus 650 $m^2/g$ étant les plus courantes. La surface spécifique (SS) du support est mesurée selon la méthode volumétrique BET de la norme britannique BS 4359/1 (1984). Le support du solide catalytique de l'invention présente en général une température de cristallisation d'au moins 700 °C, telle que par exemple d'au moins 1000 °C. La température de cristallisation du support est déterminée en soumettant un échantillon du support à un traitement thermique à différentes températures (500 °C, 700 °C, 800 °C, 950 °C, 1050 °C), et en examinant ensuite, après chaque traitement thermique, cet échantillon par diffraction des rayons X.

Le support du solide catalytique de l'invention est habituellement caractérisé par un volume poreux d'au moins 1,5 $cm^3/g$, plus spécialement d'au moins 2 $cm^3/g$, les valeurs d'au moins 2,2 $cm^3/g$ étant recommandées. Le volume poreux est généralement d'au plus 5 $cm^3/g$, en particulier d'au plus 4,5 $cm^3/g$, les valeurs d'au plus 4 $cm^3/g$ étant courantes. Le volume poreux (VP) est la somme du volume poreux constitué de pores de rayon inférieur ou égal à 75 Å, mesuré par la méthode de pénétration à l'azote (BET) selon la technique volumétrique décrite dans la norme britannique BS 4359/1 (1984), et du volume poreux mesuré par la méthode de pénétration au mercure au moyen du porosimètre de type PORO 2000 commercialisé par CARLO ERBA CO, selon la norme belge NBN B 05-202 (1976).

De bons résultats peuvent être obtenus lorsque la surface spécifique (SS) et le volume poreux (VP) du support répondent à la relation suivante :

$$SS < (VP \times 564 - 358),$$

dans laquelle SS et VP sont respectivement les valeurs numériques de la surface spécifique exprimée en $m^2/g$ et du volume poreux exprimé en $cm^3/g$.

De préférence, le support du solide catalytique de l'invention contient la silice (X), l'alumine (Y) et le phosphate d'aluminium (Z) en un pourcentage molaire (X):(Y):(Z) de (10 à 95):(1 à 80):(1 à 85), et plus particulièrement de (20 à 80):(1 à 60):(5 à 60).

Selon une variante particulièrement préférée, le support du solide catalytique de l'invention contient, outre la silice, l'alumine et le phosphate d'aluminium, du titane, généralement sous la forme de dioxyde de titane. La quantité de titane présente dans le support, exprimée en pourcentage molaire de $TiO_2$ par rapport au support du solide catalytique contenant la silice, l'alumine, le phosphate d'aluminium et le dioxyde de titane, est en général au moins égale à 0,1 % mol, de préférence à 0,5 % mol; les valeurs d'au moins 1 % mol étant les plus courantes. La quantité de titane exprimée en pourcentage molaire de $TiO_2$ ne dépasse pas le plus souvent 40 % mol, plus particulièrement pas 20 % mol, les valeurs d'au plus 15 % mol étant recommandées.

Le support selon l'invention se présente généralement à l'état d'une poudre dont les grains ont un diamètre de 20 à 200 µm.

Le support du solide catalytique de l'invention présente habituellement un poids spécifique apparent supérieur ou égal à 50 $kg/m^3$, en particulier à 100 $kg/m^3$; il est généralement au maximum égal à 500 $kg/m^3$, typiquement à 300 $kg/m^3$. Le poids spécifique apparent est mesuré par écoulement libre selon le mode opératoire suivant : dans un récipient cylindrique de 50 $cm^3$ de capacité, on verse la poudre du support à analyser en évitant de la tasser, depuis une trémie dont le bord inférieur est disposé 20 mm au-dessus du bord supérieur du récipient. On pèse ensuite le récipient rempli de la poudre et arasé à l'aide d'une latte rectiligne, on déduit la tare du poids relevé et on divise le résultat obtenu (exprimé en g) par 50.

En plus de la silice, de l'alumine, du phosphate d'aluminium, et le cas échéant du titane, le support du solide catalytique de l'invention peut éventuellement contenir des substances additionnelles. Il peut par exemple s'agir de traces d'éléments des groupes IA et IIA du tableau périodique ou de métaux tels que le fer. Ces éléments doivent toutefois être présents en des quantités limitées, pour ne pas influencer les propriétés intrinsèques du solide catalytique.

Le support du solide catalytique de l'invention peut être obtenu par tout moyen connu adéquat pour autant qu'il permette l'obtention d'un support contenant simultanément de la silice, de l'alumine et du phosphate d'aluminium. Un procédé particulier d'obtention du support consiste à mélanger, dans une première étape, un alcool, de l'eau, un alcoolate de silicium et un acide en des quantités telles que le rapport molaire eau/silicium soit de 2 à 50, à ajouter au milieu d'hydrolyse ainsi obtenu, dans une deuxième étape, une solution acide d'un composé d'aluminium et une solution d'une source d'ions phosphates, et, dans une troisième étape, un agent de précipitation pour obtenir un précipité, a laver, dans une quatrième étape, le précipité ainsi obtenu à l'eau et ensuite au moyen d'un liquide organique, puis à le sécher, dans une cinquième étape, par distillation jusqu'à l'obtention d'une poudre, et à calciner la poudre.

L'alcoolate de silicium mis en oeuvre à la première étape du procédé particulier d'obtention du support, peut être tout composé dans lequel le silicium est lié à au moins un groupement alkoxy, tel qu'un alkoxy aromatique ou aliphatique linéaire, branché ou cyclique, saturé ou insaturé, non substitué ou substitué. Les groupements alkoxy comprennent habituellement de 1 à 20 atomes de carbone. Les alcoolates de silicium comprenant des groupements alkoxy du type aliphatique sont spécialement recommandés; ceux comprenant des groupements alkoxy du type aliphatique saturé, non substitué sont préférés, tels que, par exemple, les groupements méthyle, éthyle, n-propyle, iso-propyle, n-butyle et iso-butyle. Les alcoolates de silicium qui conviennent bien sont le tétra-éthylate, le tétra-méthylate et le tétra-isopropylate de silicium. Tout particulièrement préféré est le tétraéthylate de silicium. On peut bien entendu mettre en oeuvre plusieurs alcoolates de silicium à la première étape du procédé selon l'invention.

L'alcool mis en oeuvre dans la première étape du procédé particulier d'obtention du support a pour fonction de dissoudre l'alcoolate de silicium. En principe, tout alcool qui solubilise l'alcoolate de silicium et qui est miscible à l'eau, peut convenir. On peut ainsi mettre en oeuvre un alcool dont le groupement hydrocarboné peut être saturé, insaturé, aromatique ou aliphatique, linéaire ou cyclique, non substitué ou substitué partiellement ou totalement. Les alcools aliphatiques linéaires sont préférés. On peut citer comme exemple l'éthanol, l'isopropanol et le méthanol. Tout particulièrement préféré est l'éthanol. Il va de soi qu'on peut mettre en oeuvre simultanément plusieurs alcools dans la première étape du procédé selon l'invention. On utilise de préférence un alcool dont le groupement hydrocarboné correspond à celui du groupe alkoxy de l'alcoolate de silicium utilisé.

La quantité d'alcool mise en oeuvre dans la première étape du procédé particulier d'obtention du support doit être suffisante pour permettre une dissolution complète de l'alcoolate de silicium et dépend dès lors de l'alcoolate de silicium et de l'alcool sélectionnés, de la solubilité de l'alcoolate de silicium dans l'alcool et de la température à laquelle la première étape est effectuée. En pratique, on n'a pas intérêt à utiliser une quantité très supérieure à la quantité mini-

EP 0 712 868 B1

male nécessaire, car un large excès entraînerait une dilution inutile du mélange issu de la première étape, ce qui est à éviter.

Dans un mode de réalisation préféré du procédé particulier d'obtention du support, la première étape est réalisée à pH acide et comprend, d'une part, l'adjonction de l'eau, de l'acide, de l'alcoolate de silicium et de l'alcool, la température, pendant l'adjonction, étant inférieure ou égale à 30 °C, et, d'autre part, un mûrissage du milieu d'hydrolyse ainsi obtenu à une température au moins égale à 20 °C et inférieure à la température d'ébullition du milieu, de manière à substituer une partie au moins des groupements alkoxy de l'alcoolate de silicium par des groupements hydroxy, sans qu'il se produise une gélification ou une précipitation de silice.

La première étape du mode de réalisation préféré a pour objectif (a) d'hydrolyser partiellement l'alcoolate de silicium en présence d'eau et (b) de condenser partiellement l'alcoolate de silicium hydrolysé, selon les réactions suivantes :

$$Si(O\text{-}R)_4 + x\ H_2O \rightarrow Si(OH)_x(O\text{-}R)_{4\text{-}x} + x\ R\text{-}OH \qquad\qquad (a)$$

$$2\ Si(OH)_x(O\text{-}R)_{4\text{-}x} \rightarrow O\text{-}[Si(OH)_{x\text{-}1}(O\text{-}R)_{4\text{-}x}]_2 + H_2O \qquad\qquad (b)$$

ou

$$2\ Si(OH)_x(O\text{-}R)_{4\text{-}x} \rightarrow [Si(OH)_x(O\text{-}R)_{3\text{-}x}]\text{-}O\text{-}[Si(OH)_{x\text{-}1}(O\text{-}R)_{4\text{-}x}] + R\text{-}OH$$

dans lesquelles R représente un radical hydrocarboné pouvant être aromatique ou aliphatique, saturé ou insaturé, linéaire, branché ou cyclique, qui peut éventuellement être différent dans les quatre groupes (O-R), et x représente un nombre supérieur à 0 et inférieur à 4, de préférence de 0,1 à 3,9. Dans la première étape on utilise de préférence une quantité d'eau telle que le rapport molaire entre cette quantité d'eau et la quantité de silicium mise en oeuvre soit de 2 à 20, plus particulièrement de 8 à 12, par exemple environ 10.

Par la suite, on entend désigner par l'expression "alcoolate de silicium hydrolysé et condensé" les composés O-[Si(OH)$_{x\text{-}1}$(O-R)$_{4\text{-}x}$]$_2$ et [Si(OH)$_x$(O-R)$_{3\text{-}x}$]-O-[Si(OH)$_{x\text{-}1}$(O-R)$_{4\text{-}x}$] tels que définis ci-dessus.

La combinaison de conditions opératoires, à la première étape d'hydrolyse du mode de réalisation préféré, sont avantageusement telles qu'on évite toute précipitation ou gélification de silice dans le milieu d'hydrolyse. A cet effet, le mélange à la première étape est réalisé dans des conditions déterminées concernant le pH et la température du milieu d'hydrolyse, le rapport molaire des quantités d'eau et d'alcoolate de silicium mises en oeuvre, et la manière de mélanger les réactifs. Par milieu d'hydrolyse, on entend désigner le milieu obtenu après mélange de l'eau, de l'acide, de l'alcoolate de silicium et de l'alcool. A cet effet, dans la première étape, le pH du milieu d'hydrolyse est en général inférieur à 3, de préférence de 0,5 à 2,5, par exemple environ égal à 1. L'acide mis en oeuvre à la première étape peut être de nature minérale ou organique. Il est avantageusement choisi parmi les acides miscibles à l'eau et dont l'anion est facilement éliminable dans un traitement ultérieur. Il peut par exemple s'agir de l'acide chlorhydrique, nitrique, phosphorique ou sulfurique. On utilise de préférence l'acide chlorhydrique ou l'acide nitrique. L'acide chlorhydrique convient particulièrement bien. On peut éventuellement mettre en oeuvre plusieurs acides dans la première étape du mode de réalisation préféré. La quantité d'acide doit être suffisante pour maintenir le pH acide pendant toute la durée de la première étape. La quantité d'acide dépend dès lors du degré d'acidité de l'acide utilisé ainsi que des autres réactifs, et de la température à laquelle la première étape est réalisée. On n'a pas intérêt à utiliser une quantité trop élevée de l'acide pour éviter de devoir éliminer, dans une étape ultérieure, l'excédent d'acide ou de ses dérivés.

Dans la première étape du mode de réalisation préféré, il peut s'avérer important de mélanger les réactifs de manière contrôlée afin d'éviter une précipitation ou une gélification de silice et d'éviter que le mélange ne s'échauffe. A cet effet, les réactifs peuvent être mélangés par tout moyen connu adéquat pour autant que la température pendant l'adjonction des réactifs soit au maximum égale à 30 °C et qu'il ne se produise pas de précipitation ni de gélification de silice. De préférence, le mélange est réalisé par addition d'un prémélange comprenant l'eau et l'acide à un prémélange contenant l'alcoolate de silicium et l'alcool. Ceci peut être effectué en ajoutant le prémélange eau/acide au prémélange alcool/alcoolate de silicium. Une autre méthode consiste à ajouter le prémélange alcool/alcoolate de silicium au prémélange eau/acide. On obtient de bons résultats en ajoutant l'un des prémélanges goutte à goutte dans l'autre prémélange maintenu sous agitation. On obtient des résultats particulièrement satisfaisants en ajoutant le prémélange eau/acide, goutte à goutte et sous agitation, au prémélange alcool/alcoolate de silicium.

Dans la première étape du mode de réalisation préféré, il peut s'avérer souhaitable de maintenir la température, pendant l'addition des réactifs, inférieure à 20 °C, typiquement environ 10 °C, les températures supérieures à 0 °C étant recommandées; ensuite, le milieu d'hydrolyse est soumis à un mûrissage à une temperature au moins égale à 20 °C et inférieure à la température d'ébuilition du milieu, par exemple de 30 à 100 °C, les températures de 40 à 80 °C étant les plus courantes et celles de 50 à 70 °C étant recommandées. De préférence, le mûrissage du milieu d'hydrolyse est réalisé à une température supérieure à celle de l'addition des réactifs.

Dans la première étape du mode de réalisation préféré, le mûrissage a pour fonction de permettre une hydrolyse et une condensation progressives de l'alcoolate de silicium selon les réactions définies plus haut. Toutes autres choses restant égales, le taux d'hydrolyse de l'alcoolate est d'autant plus élevé (le nombre x est d'autant plus grand) que la durée du mûrissage est grande. La durée du mûrissage doit dès lors être suffisante pour que la réaction d'hydrolyse telle que décrite plus haut ait lieu; elle doit toutefois être inférieure au temps requis pour qu'une gélification ou une précipitation de silice se produise. La durée optimale du mûrissage dépend du pH du milieu d'hydrolyse, de la nature des réactifs présents dans le milieu d'hydrolyse et de la température, et peut varier de quelques minutes à plusieurs dizaines d'heures. En général, la durée ne dépasse pas 24 heures. De préférence, la durée est de 0.5 à 3 heures.

La deuxième étape du procédé particulier d'obtention du support consiste à ajouter au milieu d'hydrolyse issu de la première étape une solution acide d'un composé d'aluminium et une solution d'une source d'ions phosphates.

Le composé d'aluminium mis en oeuvre à la deuxième étape du procédé particulier d'obtention du support peut être tout composé d'aluminium qui est soluble dans la solution acide mise en oeuvre à la deuxième étape et qui est susceptible d'être précipité sous l'effet d'un agent de précipitation. Spécialement recommandés sont les sels inorganiques d'aluminium et les alcoolates d'aluminium. Parmi les alcoolates d'aluminium, on utilise habituellement ceux dans lesquels l'aluminium est lié à au moins un groupement alkoxy. Parmi les alcoolates d'aluminium, ceux contenant des groupements aliphatiques sont spécialement recommandés; ceux contenant des groupements aliphatiques linéaires saturés non substitués sont préférés, tels que, par exemple, les groupements méthyle, éthyle, n-propyle, iso-propyle, n-butyle et iso-butyle. On utilise de préférence un alcoolate d'aluminium dont les groupements alkoxy contiennent de 1 à 20 atomes de carbone.

Les alcoolates d'aluminium dont le groupement alkoxy correspond à celui de l'alcoolate de silicium utilisé, conviennent particulièrement bien. On obtient des résultats satisfaisants avec les sels inorganiques d'aluminium. Parmi les sels inorganiques d'aluminium, le nitrate et le chlorure d'aluminium sont particulièrement préférés.

Dans une forme d'exécution particulière, dans laquelle on utilise un alcoolate d'aluminium à titre de composé d'aluminium, on peut mettre celui-ci en oeuvre, au moins en partie, à la première étape du procédé selon l'invention, de préférence, le cas échéant, dans le prémélange alcool/alcoolate de silicium. L'alcoolate d'aluminium peut également être ajouté à l'issue de la première étape, après le mûrissage.

Aux fins de la présente invention, on entend désigner par source d'ions phosphates tout composé soluble dans la solution mise en oeuvre à la deuxième étape et susceptible d'y former des ions phosphates. Spécialement recommandés sont les sels inorganiques phosphatés [par exemple le phosphate monocalcique de formule $CaH_4(PO_4)_2$, le phosphate disodique de formule $Na_2HPO_4$ et le phosphate tricalcique de formule $Ca_3(PO_4)_2$], les éthers-sels phosphatés [par exemple le phosphate d'éthyle de formule $(C_2H_5)_3PO_4$] et l'acide phosphorique. On utilise de préférence l'acide phosphorique.

La solution acide du composé d'aluminium et la solution de la source d'ions phosphates mise en oeuvre à la deuxième étape du procédé particulier d'obtention du support, peuvent être préparées par tout moyen connu adéquat et sont de préférence miscibles avec le mélange obtenu à la première étape du procédé selon l'invention.

Il va de soi que l'on peut mettre en oeuvre simultanément, à la deuxième étape, plusieurs composés d'aluminium et/ou plusieurs sources d'ions phosphates.

Les quantités totales mises en oeuvre du composé d'aluminium et de la source d'ions phosphates dépendent de la composition du support souhaitée et peuvent varier dans une large mesure.

Dans la deuxième étape du procédé particulier d'obtention du support, on préfère opérer de manière très lente pour éviter que le milieu s'échauffe, en introduisant le mélange des deux solutions goutte à goutte dans le milieu, sous une forte agitation, le milieu étant thermostatisé à une température inférieure à 30 °C, typiquement inférieure ou égale à 20 °C, par exemple comprise entre 0 et 10 °C pendant toute la durée de l'ajout.

La troisième étape du procédé particulier d'obtention du support consiste à former un précipité sous l'effet d'un agent de précipitation.

L'agent de précipitation peut être choisi parmi tous les composés susceptibles de provoquer une coprécipitation des réactifs mis en oeuvre à la première et la deuxième étape (l'alcoolate de silicium hydrolysé et condensé issu de la première étape et défini plus haut, le composé d'aluminium et la source d'ions phosphates et éventuellement l'alcoolate de titane) sous la forme d'un oxyde mixte de silicium, d'aluminium et de phosphore et éventuellement de titane. On peut citer comme exemples d'agent de précipitation, l'oxyde d'éthylène, le carbonate d'ammonium et l'hydroxyde d'ammonium. On utilise de préférence une solution aqueuse d'hydroxyde d'ammonium.

La quantité d'agent de précipitation mise en oeuvre à la troisième étape du procédé particulier d'obtention du support est de préférence suffisante pour permettre une précipitation complète de l'alcoolate de silicium hydrolysé et condensé défini plus haut, du composé d'aluminium et du composé phosphaté présents dans le milieu de coprécipitation.

Par milieu de coprécipitation, on entend désigner le mélange réactionnel en cours de précipitation à la troisième étape du procédé. Le milieu de coprécipitation comprend dès lors le milieu obtenu à l'issue de la deuxième étape du procédé selon l'invention (comprenant l'alcoolate de silicium hydrolysé et condensé, le composé d'aluminium et la source d'ions phosphates) et l'agent de précipitation. La quantité d'agent de précipitation mise en oeuvre est avantageusement suffisante pour permettre une coprécipitation complète de la masse totale d'alcoolate de silicium hydrolysé et condensé, de composé d'aluminium et de source d'ions phosphates; elle est de préférence légèrement supérieure à cette quantité suffisante.

Dans la troisième étape du procédé particulier d'obtention du support le pH du milieu de coprécipitation est généralement supérieur ou égal à 5, typiquement supérieur ou égal à 6; il est habituellement inférieur à 11, les valeurs inférieures à 10 étant recommandées. De préférence, on maintient le pH constant à une valeur de 6 à 10, par exemple 8, pendant toute la durée de la coprécipitation.

Dans la troisième étape, il peut s'avérer avantageux, selon les propriétés du support qu'on souhaite obtenir, de thermostatiser le milieu de coprécipitation à une température inférieure ou égale à 30 °C, de préférence à une température de 0 à 20 °C.

Dans la quatrième étape du procédé particulier d'obtention du support, le lavage à l'eau consiste en général à mettre le précipité en suspension dans une quantité d'eau suffisante pour éliminer une partie au moins des impuretés contenues dans le précipité, et ensuite à éliminer une partie au moins de cette quantité d'eau par tout moyen connu adéquat, par exemple par centrifugation ou par filtration. On opère de préférence par centrifugation compte tenu de la rapidité de cette méthode. On peut bien entendu répéter ce lavage à l'eau plusieurs fois. La température à laquelle ce lavage est effectué a peu d'influence sur l'efficacité du lavage et peut dès lors varier dans une large mesure. On opère de préférence à température ambiante.

Ensuite, on soumet le précipité lavé à l'eau, à un lavage au moyen d'un liquide organique, par exemple en dispersant le précipité dans ce liquide organique à température ambiante. Le lavage avec le liquide organique a pour fonction d'éliminer une partie au moins de l'eau qui imprègne le précipité. Le liquide organique sélectionné doit être au moins partiellement miscible avec l'eau, inerte vis-à-vis du précipité mais toutefois capable de mouiller le précipité. Il présente préférentiellement une température de vaporisation inférieure à 120 °C, typiquement inférieure à 100 °C, par exemple de 70 à 90 °C. Des liquides organiques utilisables dans ce lavage sont les alcools, les éthers ou leurs mélanges. Les alcools sont préférés, particulièrement ceux comprenant de 1 à 4 atomes de carbone. L'isopropanol convient bien. On peut bien entendu répéter plusieurs fois ce lavage au moyen d'un liquide organique, et mettre en oeuvre simultanément plusieurs liquides organiques. A l'issue du lavage, il est souhaitable de séparer le précipité d'une partie au moins de l'eau et du liquide organique utilisé par centrifugation ou par filtration.

Le précipité lavé est ensuite soumis, dans une cinquième étape du procédé particulier d'obtention du support, à un séchage par distillation afin d'évaporer l'eau et le liquide organique non éliminés précédemment, jusqu'à l'obtention d'une poudre du support. La distillation peut être effectuée sous pression atmosphérique ou sous pression réduite. On opère de préférence à pression atmosphérique.

Dans une variante particulière, on sélectionne, pour le lavage du précipité, un liquide organique qui forme un azéotrope avec l'eau, et, au cours du séchage, on distille d'abord l'azéotrope jusqu'à l'élimination d'au moins 95 %, de préférence au moins 98 % de l'eau et d'une partie du liquide organique, et ensuite le résidu du liquide organique encore présent dans le précipité. Dans cette forme de réalisation particulière, selon la quantité d'eau présente dans le précipité après le lavage, il est parfois nécessaire d'ajouter une quantité supplémentaire du liquide organique au précipité lavé pour permettre une élimination maximale de l'eau sous la forme du mélange azéotropique eau/liquide organique. Dans cette forme de réalisation particulière, on obtient, à l'issue du séchage, une poudre contenant en général une teneur en humidité inférieure à 1 % en poids, de préférence inférieure à 0,5 % en poids, par exemple inférieure à 0,2 % en poids.

A l'issue du séchage par distillation, on recueille une poudre du support, que l'on peut éventuellement passer au tamis pour en séparer les grains de taille non souhaitée. On soumet cette poudre à une calcination. La calcination a peur fonction d'extraire, à température élevée, les impuretés organiques de la poudre. Elle est généralement poursuivie jusqu'à ce que le poids de la poudre reste constant au cours du temps, tout en évitant une cristallisation de la poudre. La calcination peut être effectuée sous air (de préférence sous air sec) dans un lit fluidisé à une température inférieure à la température de cristallisation de la poudre. La température est en général de 300 à 1500 °C, typiquement de 350 à 1000 °C, de préférence de 400 à 600 °C.

Dans une première forme d'exécution du procédé particulier d'obtention du support, celui-ci est obtenu en mettant en oeuvre en outre, dans la première ou dans la deuxième étape, un alcoolate d'un métal de transition des groupes IVB ou VB du tableau périodique (tel que le titane, le zirconium ou le vanadium) ou un alcoolate d'un élément du groupe IIIA du tableau périodique différent de l'aluminium (tel que le bore), ou encore un sel organique ou inorganique de ces éléments. Les alcoolates sont préférés, en particulier ceux du titane. L'alcoolate peut par exemple être un composé comprenant au moins un groupement alkoxy, tel qu'un alkoxy aromatique ou aliphatique linéaire, branché ou cyclique, saturé ou insaturé, non substitué ou substitué. Les groupements alkoxy comprennent habituellement de 1 à 20 atomes de carbone. L'alcoolate est de préférence soluble dans le milieu d'hydrolyse. L'acétylacétonate de titane convient particulièrement bien.

On peut bien entendu mettre en oeuvre plusieurs alcoolates et/ou sels. L'alcoolate ou le sel peut éventuellement être mis en oeuvre à l'état d'une solution dans un hydrocarbure liquide tel qu'un alcool.

La quantité d'alcoolate ou de sel mise en oeuvre dans la première forme d'exécution est généralement telle que le métal de transition ou l'élément du groupe IIIA soit présent dans le support en une proportion variant de 0,05 à 20 % en poids, de préférence de 0,1 à 15 % en poids, plus particulièrement de 0,5 à 10 % en poids sur base du poids total du support.

Dans la première forme d'exécution, l'alcoolate ou le sel peut être mis en oeuvre à tout moment à la première ou la deuxième étape. L'alcoolate ou le sel peut par exemple être ajouté au prémélange comprenant l'eau et l'acide, ou au prémélange contenant l'alcoolate de silicium et l'alcool. En variante, l'alcoolate ou le sel peut être ajouté au milieu d'hydrolyse obtenu après mélange de l'eau, de l'acide, de l'alcoolate de silicium et de l'alcool, avant, pendant ou après le mûrissage. De bons résultats sont obtenus lorsque l'on ajoute l'alcoolate ou le sel pendant le mûrissage. On préconise d'ajouter l'alcoolate ou le sel après une première partie du mûrissage, qui représente avantageusement de 40 à 60 %, par exemple environ 50 %, de la durée totale du mûrissage, la deuxième partie étant effectuée après l'addition de l'alcoolate ou le sel.

La première forme d'exécution s'avère spécialement avantageuse lorsque l'on souhaite incorporer le titane dans le support en une quantité élevée, qui peut aller jusque 20 % en poids du poids total du support, tout en évitant la formation, dans une étape ultérieure, d'agglomérats de dioxyde de titane cristallin sous la forme "anatase" ou "rutile".

Dans une deuxième forme d'exécution du procédé particulier d'obtention du support, on soumet le précipité issu de la troisième étape à une maturation. Celle-ci est réalisée dans un milieu de maturation, qui peut être le milieu de coprécipitation recueilli de la troisième étape, éventuellement sous agitation. On peut y ajouter un composé inerte modifiant le pH du milieu de maturation, par exemple un composé basique. En variante, le précipité est d'abord séparé du milieu de coprécipitation, par exemple par centrifugation, et ensuite remis en suspension dans un liquide inerte tel que de l'eau ou un alcool pour effectuer la maturation. Cette variante présente l'avantage d'éliminer une partie des impuretés ioniques adsorbées dans le précipité, provenant des réactifs mis en oeuvre lors de la fabrication du précipité.

La maturation a pour fonction de prolonger la coprécipitation et ainsi modifier la surface spécifique et le volume poreux du précipité. Elle est habituellement effectuée à une température pouvant varier de la température ambiante jusqu'à la température d'ébullition du milieu de maturation. On opère de préférence à environ 20 °C. La durée de la maturation dépend de la température et des propriétés (surface spécifique et volume poreux) requises du support. Elle peut dès lors varier de quelques minutes à plusieurs dizaines d'heures. Les meilleurs résultats sont obtenus avec une durée d'au moins une heure. Pour des considérations d'ordre économique, on n'a pas intérêt à prolonger la maturation au delà de 48 heures. La maturation est en général effectuée à un pH supérieur ou égal à 6, de préférence de 8 à 10.

Dans une troisième forme d'exécution du procédé particulier d'obtention du support, le précipité obtenu à la troisième étape précitée est soumis à un broyage, ensuite à une mise en suspension dans un liquide, suivie d'une pulvérisation de la suspension du précipité en gouttelettes. On peut utiliser à titre de liquide, tout dispersant inerte vis-à-vis du précipité, par exemple de l'eau. Les particules recueillies de la pulvérisation sont ensuite soumises successivement à un lavage à l'eau et au moyen d'un liquide organique, à un séchage par distillation et à une calcination, tels que décrits ci-avant. En variante, la pulvérisation peut être effectuée après le lavage à l'eau.

Le solide catalytique selon l'invention peut être obtenu de manière connue en soi par imprégnation de la poudre de support avec une solution aqueuse ou organique d'un composé du chrome, suivie d'un séchage en atmosphère oxydante. On peut utiliser à cet effet un composé du chrome choisi parmi les sels solubles tels que les oxydes, l'acétate, le chlorure, le sulfate, le chromate et le bichromate en solution aqueuse, ou tel que l'acétylacétonate en solution organique. Après l'imprégnation du support avec le composé du chrome, le support imprégné est habituellement activé en le chauffant à une température de 400 à 1000 °C pour transformer une partie au moins du chrome en chrome hexavalent.

Le solide catalytique selon l'invention peut également être obtenu au moyen d'un mélange mécanique de la poudre du support avec un composé solide du chrome, par exemple de l'acétylacétonate de chrome. Ensuite, ce mélange peut être préactivé à une température inférieure à la température de tusion du composé du chrome avant de l'activer conventionnellement comme décrit ci-dessus.

En variante, le composé du chrome peut également être incorporé à la poudre du support pendant la fabrication de celle-ci ou pendant la fabrication du précipité. A cet effet, il peut par exemple être ajouté, en partie ou en totalité, à la solution acide du composé d'aluminium et de la source d'ions phosphates mise en oeuvre à la deuxième étape du procédé selon l'invention de manière à coprécipiter l'oxyde mixte de chrome simultanément avec l'oxyde mixte de silicium, d'aluminium et de phosphore. On peut également ajouter le composé du chrome au précipité avant ou après le mûrissage de celui-ci.

Dans le solide catalytique selon l'invention, le chrome est généralement présent en proportion variant de 0,05 à 10 % en poids, de préférence de 0,1 à 5 % en poids, plus particulièrement de 0,25 à 2 % en poids de chrome sur base du poids total du solide catalytique.

De préférence, le solide catalytique ne contient pas de composés organométalliques, en particulier de composés organoaluminiques, ni de dérivés de ceux-ci.

Le système catalytique selon l'invention peut être utilisé pour l'homopolymérisation d'oléfines contenant de 2 à 8 atomes de carbone par molécule. De préférence, ces oléfines sont choisies parmi l'éthylène, le propylène, le 1-butène, le 1-pentène, le 3-méthyl-1-butène, le 1-hexène, les 3- et 4- méthyl-1-pentènes et le 1-octène. L'éthylène et le propylène conviennent bien. Les homopolymères préférés sont ceux de l'éthylène.

Le système catalytique selon l'invention présente l'avantage, lorsqu'il est utilisé pour l'homopolymérisation d'oléfines, de procurer des homopolymères de densité plus faible par rapport à un procédé d'homopolymérisation effectué dans les mêmes conditions mais en l'absence de cocatalyseur.

Le système catalytique selon l'invention peut également être utilisé pour la copolymérisation d'oléfines contenant de 2 à 8 atomes de carbone avec un ou plusieurs comonomères. Les comonomères peuvent être choisis parmi les oléfines décrites ci-avant et les dioléfines comprenant de 4 à 18 atomes de carbone. Les dioléfines peuvent être choisies parmi les dioléfines aliphatiques non conjuguées telles que le 4-vinylcyclohexène ou des dioléfines alicycliques ayant un pont endocyclique telles que le dicyclopentadiène, le méthylène- et l'éthylidène-norbornène, et des dioléfines aliphatiques conjuguées telles que le 1,3-butadiène, l'isoprène et le 1,3-pentadiène. On préfère les copolymères de l'éthylène avec un ou plusieurs comonomères, en particulier ceux contenant au moins 90%, plus précisément au moins 95% en poids d'éthylène. Les comonomères préférés de l'éthylène sont le propylène, le 1-butène, le 1-hexène ou le 1-octène. Le 1-butène et/ou le 1-hexène donnent les meilleurs résultats.

Le système catalytique selon l'invention présente l'avantage, lorsqu'il est utilisé pour la copolymérisation d'oléfines avec un ou plusieurs comonomères, de procurer des copolymères de plus faible densité par rapport à un procédé de copolymérisation effectué dans les mêmes conditions (et en particulier en mettant en oeuvre une teneur en comonomère identique) mais en l'absence de cocatalyseur.

L'invention concerne dès lors également un procédé pour la polymérisation d'oléfines telles que définies plus haut, mettant en oeuvre un système catalytique conforme à l'invention. Elle concerne plus particulièrement un tel procédé appliqué à l'homopolymérisation de l'éthylène ou encore à la copolymérisation de l'éthylène avec de l'hexène et/ou du butène.

Dans le procédé de polymérisation selon l'invention, la polymérisation peut être effectuée indifféremment en solution, en suspension dans un diluant hydrocarboné ou encore en phase gazeuse. On obtient de bons résultats dans les polymérisations en suspension.

La polymérisation en suspension est effectuée dans un diluant hydrocarboné tel que les hydrocarbures aliphatiques, cycloaliphatiques et aromatiques liquides, à une température telle qu'au moins 80 % (de préférence au moins 90 %) du polymère formé y soit insoluble. Les diluants préférés sont les alcanes linéaires tels que le n-butane, le n-hexane et le n-heptane ou les alcanes ramifiés tels que l'isobutane, l'isopentane, l'isooctane et le 2,2-di-méthylpropane ou les cycloalcanes tels que le cyclopentane et le cyclohexane ou leurs mélanges.

La quantité de composé organoaluminique mise en oeuvre dans le procédé de polymérisation selon l'invention est généralement telle que le rapport molaire d'aluminium au chrome soit d'au moins 0,1, en particulier d'au moins 0,5, les rapports d'au moins 1 étant favorables. Le rapport molaire d'aluminium au chrome est habituellement d'au plus 100, plus précisément d'au plus 20, les rapports d'au plus 10 étant recommandés.

La température de polymérisation est choisie généralement entre 20 et 200 °C, de préférence entre 50 et 150 °C, en particulier entre 80 et 115 °C. La pression d'éthylène est choisie le plus souvent entre la pression atmosphérique et 5 MPa, de préférence entre 0,4 et 2 MPa, plus particulièrement entre 0,6 et 1,5 MPa.

La polymérisation peut être effectuée en continu ou en discontinu, en un seul réacteur ou dans plusieurs réacteurs disposés en série, les conditions de polymérisation (température, teneur éventuelle en comonomère, teneur éventuelle en hydrogène, type de milieu de polymérisation) dans un réacteur étant différentes de celles utilisées dans les autres réacteurs.

Dans le procédé de polymérisation selon l'invention, le solide catalytique et le cocatalyseur sont avantageusement mis en oeuvre sans avoir été mélangés au préalable.

Les polyoléfines obtenues au moyen du procédé de polymérisation selon l'invention présentent généralement une densité d'au moins 0,930 g/cm$^3$, en particulier d'au moins 0,935 g/cm$^3$, les valeurs d'au moins 0,940 g/cm$^3$ étant préférées. La densité est le plus souvent d'au plus 0,960 g/cm$^3$, plus précisément d'au plus 0,955 g/cm$^3$, les densités d'au plus 0,950 g/cm$^3$ étant les plus courantes.

Les exemples 1 à 3 dont la description suit, servent à illustrer l'invention. Les exemples 1 et 2 sont conformes à l'invention. Dans ces exemples on a préparé un système catalytique que l'on a ensuite utilisé pour la copolymérisation en suspension de l'éthylène avec de l'hexène. L'exemple 3 est donné à titre de comparaison. La signification des symboles utilisés exprimant les propriétés mentionnées et les méthodes de mesure de ces propriétés sont explicitées ci-dessous.

SS = surface spécifique du support mesurée par la méthode de pénétration à l'azote selon la méthode volumétrique de la norme britannique BS 4359/1 (1984).

VP = volume poreux du support, égal à la somme du volume poreux constitué de pores de rayon inférieur ou égal à 75 Å, mesuré par la méthode de pénétration à l'azote selon la méthode volumétrique de la norme britannique BS 4359/1 (1984), et du volume poreux mesuré par la méthode de pénétration au mercure au moyen du porosimètre du type PORO 2000 commercialisé par CARLO ERBA CO, selon la norme belge NBN B 05-202 (1976).

HLMI = indice de fluidité du polyéthylène fondu à 190 °C, mesuré sous une charge de 21,6 kg et exprimé en g/10 min, suivant la norme ASTM D 1238 (1986).

$\mu$ = viscosité dynamique du polyéthylène exprimée en dPa.s et mesurée à un gradient de vitesse de 100 $s^{-1}$ et à 190 °C.

MVS = masse volumique standard (ou densité) du polyéthylène exprimée en $kg/m^3$ et mesurée selon la norme ISO 1183 (1987).

Exemples 1 et 2 (conformes à l'invention)

A. Préparation d'un support

a) Première étape (hydrolyse)

On a ajouté, goutte à goutte, à une solution de tétra-éthylate de silicium et d'éthanol, thermostatisée à 10 °C, une solution d'eau et d'acide chlorhydrique 1 M, de telle manière à obtenir une concentration en $H^+$ de 0,1 M. Les quantités de tétra-éthylate de silicium, d'éthanol, d'eau et d'acide chlorhydrique qui ont été mises en oeuvre, sont présentées dans le tableau I. Ensuite, on a soumis le milieu d'hydrolyse ainsi obtenu à un mûrissage à 60 °C pendant 2 heures.

b) Deuxième étape

On a préparé une solution aqueuse contenant du chlorure d'aluminium hydraté et de l'acide phosphorique, les quantités mises en oeuvre étant représentées dans le tableau I. Ensuite, on a ajouté la solution ainsi obtenue au milieu d'hydrolyse obtenu en (a), sous agitation vigoureuse et à 10 °C.

c) Troisième étape (coprécipitation)

On a ajouté à 500 g d'une solution aqueuse d'hydroxyde d'ammonium de pH 8 thermostatisée à 10 °C, le mélange obtenu en (b), en maintenant le pH constant à une valeur de 8, afin d'effectuer une précipitation.

d) Maturation

On a soumis le précipité obtenu en (c) à une maturation à pH 8, pendant 2 heures, sous légère agitation et à 60 °C.

e) Quatrième étape (lavage)

On a lavé le précipité obtenu en (d) d'abord 3 fois à l'eau, puis 1 fois au moyen d'isopropanol.

f) Cinquième étape (séchage)

On a soumis le précipité lavé obtenu en (e) à une distillation de l'azéotrope eau-isopropanol à pression ambiante, puis de l'isopropanol d'abord à pression ambiante et ensuite à pression réduite, de manière à obtenir une poudre dont la teneur en humidité est inférieure à 1 % en poids.

g) Calcination

On a calciné la poudre obtenue en (f) dans un lit fluidisé sous balayage d'air sec, pendant 4 heures à 500 °C. On a recueilli une poudre d'un support dont la composition (% molaire de silice, d'alumine et de phosphate d'aluminium), la surface spécifique, le volume poreux et la température de cristallisation sont représentés dans le tableau I.

Tableau I

| Première étape : | | |
|---|---|---|
| quantité mise en oeuvre de : | | |
| tétra-éthylate de silicium (g) | | 34,6 |
| éthanol (g) | | 41,6 |
| eau (g) | | 18,9 |
| acide chlorhydrique 1 M (g) | | 12,0 |
| Deuxième étape : | | |
| quantité mise en oeuvre de : | | |
| $AlCl_3.6H_2O$ (g) | | 40,1 |
| acide phosphorique de 85 % (g) | | 14,3 |
| eau (g) | | 33,3 |
| Support obtenu : | | |
| composition : | $SiO_2$ (% mol) | 54,2 |
| | $Al_2O_3$ (% mol) | 10,8 |
| | $AlPO_4$ (% mol) | 35,0 |
| SS ($m^2$/g) | | 307 |
| VP ($cm^3$/g) | | 2,33 |

B. Préparation d'un solide catalytique

On a mélangé le support obtenu en A avec de l'acétylacétonate de chrome en une quantité telle que le mélange comprenne 1 % en poids de chrome. Puis, on a traité le mélange ainsi obtenu dans un lit fluidisé à 150 °C pendant 2 heures sous balayage d'air sec. Ensuite, on l'a calciné dans le lit fluidisé à 700 °C pendant 5 heures sous air sec, et on a recueilli le solide catalytique.

C. Polymérisation de l'éthylène

Le tableau II rassemble les conditions dans lesquelles la polymérisation a été effectuée.

Dans un autoclave de 3 litres, préalablement séché et muni d'un agitateur, on a introduit x mg du solide catalytique obtenu en B, y ml d'une solution de triéthylaluminium d'une concentration de 40 g/l et 1 litre d'isobutane. La température a été élevée à T °C et de l'éthylène a été introduit dans l'autoclave à une pression partielle de p MPa. Une quantité initiale de m g d'hexène a été introduit. Au cours de la polymérisation, des quantités supplémentaires d'hexène ont été ajoutées de manière à maintenir le rapport molaire éthylène/hexène dans l'autoclave constant. La quantité totale introduite d'hexène était de n g. La pression d'éthylène et la température ont été maintenues constantes durant le temps nécessaire à la production d'une quantité définie de polyéthylène. Après dégazage, le polymère a été récupéré sous forme de particules, dont les propriétés sont rassemblées dans le tableau II.

Tableau II

| Exemple | 1 | 2 |
|---|---|---|
| x | 154 | 166 |
| y | 0.2 | 0.2 |
| T | 102 | 104 |
| p | 0.75 | 0.75 |
| m | 2 | 1.5 |
| n | 3 | 2.3 |
| HLMI | 24 | 31 |
| MVS | 0.946 | 0.942 |
| $\mu$ | 19000 | 18000 |

Exemple 3 (donné à titre de comparaison)

Dans cet exemple on a copolymérisé de l'éthylène dans des conditions similaires aux exemples 1 et 2 à l'exception du cocatalyseur qui a été omis.

A. Préparation d'un solide catalytique

On a utilisé le solide catalytique des exemples 1 et 2.

B. Polymérisation de l'éthylène

On a répété les opérations de l'exemple 1.C dans les conditions énoncées dans le tableau III, à l'exception du cocatalyseur. Les propriétés du copolymère obtenu sont rassemblées dans le tableau III.

Tableau III

| Exemple | 3 |
|---|---|
| x | 160 |
| y | 0 |
| T | 104 |
| p | 0.75 |
| m | 2 |
| n | 3.4 |
| HLMI | 13.8 |
| MVS | 0.959 |
| $\mu$ | 21000 |

La comparaison du résultat de l'exemple 3 avec celui des exemples 1 et 2 fait apparaître le progrès apporté par l'invention, à savoir que la présence d'un composé organoaluminique à titre de cocatalyseur permet d'obtenir des densités plus faibles.

Exemples 4 et 5 (conformes à l'invention)

Dans ces exemples, un système catalytique conforme à l'invention a été utilisé pour l'homopolymérisation d'éthy-

EP 0 712 868 B1

lène éventuellement en présence d'hydrogène (exemple 5).

A. <u>Préparation d'un support</u>

Les opérations de l'exemple 1.A ont été répétées dans les conditions réglées pour obtenir un support dont les caractéristiques étaient les suivantes:

| composition | $SiO_2$ (% mol) | 50,4 |
|---|---|---|
| | $Al_2O_3$ (% mol) | 1,8 |
| | $AlPO_4$ (% mol) | 47,8 |
| | SS ($m^2$/g) | 293 |
| | VP ($cm^3$/g) | 3,17 |

B. <u>Préparation d'un solide catalytique</u>

Les opérations de l'exemple 1.B ont été répétées.

C. <u>Homopolymérisation de l'éthylène</u>

On a répété les opérations de l'exemple 1.C dans les conditions énoncées dans le tableau IV.
Dans l'exemple 5, de l'hydrogène a également été introduit dans l'autoclave à une pression partielle de 0,9 MPa.
Les propriétés de l'homopolymère obtenu sont également rassemblées dans le tableau IV.

Tableau IV

| Exemples | 4 | 5 |
|---|---|---|
| x | 151 | 134 |
| y | 0.2 | 0.2 |
| T | 102 | 95 |
| p | 0.75 | 0.75 |
| m | 0 | 0 |
| n | 0 | 0 |
| HLMI | 29 | 159 |
| MVS | 0.942 | 0.946 |
| $\mu$ | 14100 | 8200 |

**Revendications**

1.  Système catalytique pour la polymérisation d'oléfines comprenant un solide catalytique à base de chrome déposé sur un support contenant de la silice, de l'alumine et du phosphate d'aluminium et un cocatalyseur choisi parmi les composés organoaluminiques.

2.  Système catalytique selon la revendication 1, dans lequel le composé organoaluminique répond à la formule $AlR_{3-n-m}(OR')_nX_m$ dans laquelle R et R' sont identiques ou différents et représentent chacun un radical hydrocarboné, X représente un halogène, n et m représentent des nombres tels que $0 \leq n < 3$ et $0 \leq m < 3$.

3.  Système catalytique selon la revendication 2, dans lequel n et m sont 0.

4.  Système catalytique selon la revendication 3, dans lequel R est choisi parmi les radicaux alkyle (linéaire ou branché), cycloalkyle, arylalkyle, aryle et alkylaryle contenant jusqu'à 20 atomes de carbone.

5. Système catalytique selon la revendication 4, dans lequel le composé organoaluminique est le triéthylaluminium.

6. Système catalytique selon l'une quelconque des revendications 1 à 5, dans lequel le solide catalytique contient de 0,05 à 10 % en poids de chrome sur base du poids total du solide catalytique.

7. Système catalytique selon l'une quelconque des revendications 1 à 6, dans lequel le support contient la silice (X), l'alumine (Y) et le phosphate d'aluminium (Z) dans un pourcentage molaire (X):(Y):(Z) de (10 à 95):(1 à 80):(1 à 85).

8. Système catalytique selon l'une quelconque des revendications 1 à 7, dans lequel le support contient en outre du titane en une quantité, exprimée en pourcentage molaire de $TiO_2$ par rapport au support du solide catalytique contenant la silice, l'alumine, le phosphate d'aluminium et le dioxyde de titane, de 0,1 à 40 % mol.

9. Système catalytique selon l'une quelconque des revendications 1 à 8, dans lequel le support présente une surface spécifique de 100 à 800 $m^2$/g, une température de cristallisation d'au moins 700 °C, un volume poreux de 1,5 à 5 $cm^3$/g, une masse volumique standard de 50 à 500 kg/$m^3$.

10. Système catalytique selon la revendication 9, dans lequel la surface spécifique (SS) et le volume poreux (VP) répondent à la relation suivante

$$SS < (VP \times 564 - 358)$$

dans laquelle SS et VP désignent respectivement les valeurs numériques de la surface spécifique exprimée en $m^2$/g et du volume poreux exprimé en $cm^3$/g.

11. Système catalytique selon l'une quelconque des revendications 1 à 10, dans lequel le support est obtenu en mélangeant, dans une première étape, un alcool, de l'eau, un alcoolate de silicium et un acide en des quantités telles que le rapport molaire eau/silicium soit de 2 à 50, en ajoutant au milieu d'hydrolyse ainsi obtenu, dans une deuxième étape, une solution acide d'un composé d'aluminium et une solution d'une source d'ions phosphates, et, dans une troisième étape, un agent de précipitation pour obtenir un précipité, en lavant, dans une quatrième étape, le précipité ainsi obtenu à l'eau et ensuite au moyen d'un liquide organique, puis en le séchant, dans une cinquième étape, par distillation jusqu'à l'obtention d'une poudre, et en calcinant la poudre.

12. Système catalytique selon la revendication 11, dans lequel la première étape de l'obtention du support est réalisée à pH acide, et comprend, d'une part, l'adjonction de l'eau, de l'acide, de l'alcoolate de silicium et de l'alcool, la température, pendant l'adjonction, étant inférieure ou égale à 30 °C, et, d'autre part, un mûrissage du milieu d'hydrolyse ainsi obtenu à une température au moins égale à 20 °C et inférieure à la température d'ébullition du milieu, de manière à substituer une partie au moins des groupements alkoxy de l'alcoolate de silicium par des groupements hydroxy, sans qu'il se produise une précipitation ou gélification de silice.

13. Procédé de polymérisation d'au moins une oléfine au moyen du système catalytique conforme à l'une quelconque des revendications 1 à 12.

14. Procédé de polymérisation selon la revendication 13 appliqué à l'homopolymérisation de l'éthylène.

15. Procédé de polymérisation selon la revendication 13 appliqué à la copolymérisation d'éthylène avec de l'hexène et/ou du butène.

**Claims**

1. Catalyst system for olefin polymerization, including a catalytic solid based on chromium deposited on a support containing silica, alumina and aluminium phosphate and a cocatalyst chosen from organoaluminium compounds.

2. Catalyst system according to Claim 1, in which the organoaluminium compound corresponds to the formula $AlR_{3-n-m}(OR')_nX_m$ in which R and R' are identical or different and each denotes a hydrocarbon radical, X denotes a halogen and n and m denote numbers such that $0 \leq n < 3$ and $0 \leq m < 3$.

3. Catalyst system according to Claim 2, in which n and m are 0.

4. Catalyst system according to Claim 3, in which R is chosen from alkyl (linear or branched), cycloalkyl, arylalkyl, aryl and alkylaryl radicals containing up to 20 carbon atoms.

5. Catalyst system according to Claim 4, in which the organoaluminium compound is triethylaluminium.

6. Catalyst system according to any one of Claims 1 to 5, in which the catalytic solid contains from 0.05 to 10 % by weight of chromium based on the total weight of the catalytic solid.

7. Catalyst system according to any one of Claims 1 to 6, in which the support contains silica (X), alumina (Y) and aluminium phosphate (Z) in a molar percentage (X):(Y):(Z) of (10 to 95):(1 to 80):(1 to 85).

8. Catalyst system according to any one of Claims 1 to 7, in which the support additionally contains titanium in a quantity, expressed as molar percentage of $TiO_2$ relative to the support of the catalytic solid containing the silica, alumina, aluminium phosphate and titanium dioxide, of 0.1 to 40 mol%.

9. Catalyst system according to any one of Claims 1 to 8, in which the support has a specific surface of 100 to 800 $m^2/g$, a crystallization temperature of at least 700°C, a pore volume of 1.5 to 5 $cm^3/g$ and a standard density of 50 to 500 $kg/m^3$.

10. Catalyst system according to Claim 9, in which the specific surface (SS) and the pore volume (PV) correspond to the following relationship

$$SS < (PV \times 564 - 358)$$

in which SS and PV denote, respectively, the numerical values of the specific surface expressed in $m^2/g$ and of the pore volume expressed in $cm^3/g$.

11. Catalyst system according to any one of Claims 1 to 10, in which the support is obtained by mixing, in a first stage, an alcohol, water, a silicon alcoholate and an acid in quantities such that the water/silicon molar ratio is from 2 to 50, by adding to the hydrolysis mixture thus obtained, in a second stage, an acidic solution of an aluminium compound and a solution of a source of phosphate ions, and, in a third stage, a precipitating agent to obtain a precipitate, by washing, in a fourth stage, the precipitate thus obtained with water and then with an organic liquid, and in then drying it, in a fifth stage, by distillation until a powder is obtained, and by calcining the powder.

12. Catalyst system according to Claim 11, in which the first stage of obtaining the support is carried out at acidic pH and includes, on the one hand, the addition of water, of the acid, of the silicon alcoholate and of the alcohol, the temperature during the addition being lower than or equal to 30°C, and, on the other hand, maturing the hydrolysis mixture thus obtained at a temperature of at least 20°C and lower than the boiling temperature of the mixture, so as to replace at least a proportion of the alkoxy groups of the silicon alcoholate with hydroxyl groups without producing a precipitation or gelling of silica.

13. Process for the polymerization of at least one olefin by means of the catalyst system in accordance with any one of Claims 1 to 12.

14. Polymerization process according to Claim 13, applied to the homopolymerization of ethylene.

15. Polymerization process according to Claim 13, applied to the copolymerization of ethylene with hexene and/or butene.

**Patentansprüche**

1. Katalytisches System für die Polymerisation von Olefinen, das einen katalytischen Feststoff auf der Basis von Chrom, der auf einem Siliciumdioxid, Aluminiumoxid und Aluminiumphosphat enthaltenden Träger abgeschieden ist, und einen unter den Organoaluminiumverbindungen ausgewählten Cokatalysator umfaßt.

2. Katalytisches System gemäß Anspruch 1, bei dem die Organoaluminiumverbindung der Formel $AlR_{3-n-m}(OR')_nX_m$

entspricht, in der R und R' gleich oder verschieden sind und jeweils einen Kohlenwasserstoffrest darstellen, X ein Halogen darstellt und n und m solche Zahlen darstellen, daß $0 \leq n < 3$ und $0 \leq m < 3$.

3. Katalytisches System gemäß Anspruch 2, bei dem n und m gleich 0 sind.

4. Katalytisches System gemäß Anspruch 3, bei dem R unter den (linearen oder verzweigten) Alkyl-, den Cycloalkyl-, Arylalkyl-, Aryl- und Alkylarylresten mit bis zu 20 Kohlenstoffatomen ausgewählt ist.

5. Katalytisches System gemäß Anspruch 4, bei dem die Organoaluminiumverbindung Triethylaluminium ist.

6. Katalytisches System gemäß einem der Ansprüche 1 bis 5, bei dem der katalytische Feststoff 0,05 bis 10 Gew.-% Chrom, bezogen auf das Gesamtgewicht des katalytischen Feststoffs, enthält.

7. Katalytisches System gemäß einem der Ansprüche 1 bis 6, bei dem der Träger Siliciumdioxid (X), Aluminiumoxid (Y) und Aluminiumphosphat (Z) in einem Molprozentsatz (X):(Y):(Z) von (10 bis 95):(1 bis 80):(1 bis 85) enthält.

8. Katalytisches System gemäß einem der Ansprüche 1 bis 7, bei dem der Träger außerdem Titan in einer Menge, ausgedrückt als Molprozentsatz an $TiO_2$, bezogen auf den Siliciumdioxid, Aluminiumoxid, Aluminiumphosphat und Titandioxid enthaltenden Träger des katalytischen Feststoffs, von 0,1 bis 40 Mol-% enthält.

9. Katalytisches System gemäß einem der Ansprüche 1 bis 8, bei dem der Träger eine spezifische Oberfläche von 100 bis 800 $m^2$/g, eine Kristallisationstemperatur von wenigstens 700 °C, ein Porenvolumen von 1,5 bis 5 $cm^3$/g und eine Standarddichte von 50 bis 500 kg/$m^3$ aufweist.

10. Katalytisches System gemäß Anspruch 9, bei dem die spezifische Oberfläche (SS) und das Porenvolumen (VP) der folgenden Beziehung

$$SS < (VP \times 564 - 358)$$

entsprechen, in der SS und VP die numerischen Werte der spezifischen Oberfläche, ausgedrückt in $m^2$/g, beziehungsweise des Porenvolumens, ausgedrückt in $cm^3$/g, bezeichnen.

11. Katalytisches System gemäß einem der Ansprüche 1 bis 10, bei dem der Träger erhalten wird, indem man in einem ersten Schritt einen Alkohol, Wasser, ein Siliciumalkoholat und eine Säure in solchen Mengen mischt, daß das Molverhältnis Wasser/Silicium 2 bis 50 beträgt, indem man dem so erhaltenen Hydrolysemedium in einem zweiten Schritt eine saure Lösung einer Aluminiumverbindung und eine Lösung einer Phosphationenquelle und in einem dritten Schritt ein Fällungsmittel, um einen Niederschlag zu erhalten, hinzufügt, indem man in einem vierten Schritt den so erhaltenen Niederschlag mit Wasser und anschließend mit einer organischen Flüssigkeit wäscht, indem man ihn dann in einem fünften Schritt durch Destillation bis zum Erhalt eines Pulvers trocknet und indem man das Pulver glüht.

12. Katalytisches System gemäß Anspruch 11, bei dem der erste Schritt der Herstellung des Trägers bei saurem pH-Wert durchgeführt wird und einerseits das Hinzufügen des Wassers, der Säure, des Siliciumalkoholats und des Alkohols, wobei die Temperatur während der Zugabe kleiner oder gleich 30 °C ist, und andererseits ein Reifen des so erhaltenen Hydrolysemediums bei einer Temperatur von wenigstens gleich 20 °C und niedriger als die Siedetemperatur des Mediums umfaßt, so daß wenigstens ein Teil der Alkoxygruppen des Siliciumalkoholats durch Hydroxygruppen ersetzt wird, ohne daß ein Ausfällen oder Gelieren von Siliciumdioxid erfolgt.

13. Verfahren zur Polymerisation wenigstens eines Olefins mittels des katalytischen Systems gemäß einem der Ansprüche 1 bis 12.

14. Verfahren zur Polymerisation gemäß Anspruch 13, das auf die Homopolymerisation des Ethylens angewendet wird.

15. Verfahren zur Polymerisation gemäß Anspruch 13, das auf die Copolymerisation von Ethylen mit Hexen und/oder Buten angewendet wird.